# FASCICULE DE BREVET EUROPEEN

(11) **EP 1 588 096 B1**
(45) Date de publication et mention de la délivrance du brevet: **03.10.2018**
(21) Numéro de dépôt: 04700051.8
(22) Date de dépôt: 02.01.2004
(51) Int. Cl.: F23C 10/00

(54) **INSTALLATION DE COMBUSTION AVEC RÉCUPÉRATION DE CO2**
VERBRENNUNGSANLAGE MIT WIEDERGEWINNUNG VON C02
COMBUSTION INSTALLATION WITH CO2 RECOVERY

(30) Priorité: 16.01.2003 FR 0300432
(43) Date de publication de la demande: 26.10.2005
(73) Titulaire: General Electric Technology GmbH, 5400 Baden (CH)
(72) Inventeur: BEAL, Corinne, F-78960 VOISINS LE BRETONNEUX (FR); MORIN, Jean-Xavier, F-45170 NEUVILLE AUX BOIS (FR)
(74) Mandataire: General Electric Technology GmbH
(86) Numéro de dépôt international: PCT/FR2004/050000
(87) Numéro de publication internationale: WO 2004/065847

(56) Documents cités:
- US-A- 5 509 362
- US-B1- 6 494 153
- US-B2- 6 572 761
- R.K.LYON AND J.A.COLE: "Pollution Free Combustion of Coal and Other Fossil Fuels" 26 octobre 1998 (1998-10-26), WESTERN STATES SECTION OF THE COMBUSTION INSTITUTE (WSS/CI) - 1998 FALL MEETING - PAPER 98F-36 , SEATTLE (WASHINGTON) , XP008022724 page 5, alinéa 6 page 10, alinéa 2 - page 11, alinéa 1; figure 4

## Description

La présente invention concerne les installations de combustions de matières solides carbonées pour la production d'électricité et/ou de vapeur. Les matières solides peuvent être par exemple des combustibles fossiles comme du charbon, des déchets ou de la biomasse et elles sont injectées dans un foyer, notamment un foyer fonctionnant avec un lit fluidisé.

La combustion des combustibles fossiles produit des émissions gazeuses de CO₂ et de SO₂ en quantité réduite. L'injection de calcaire au niveau du foyer permet de réduire in situ les émissions de SO₂, mais cette réduction de SO₂ s'accompagne d'une production secondaire de CO₂ qui vient s'ajouter au CO₂ venant de la combustion des matières carbonées. Or le CO₂ est un gaz à effet de serre devant faire l'objet d'une limitation d'émissions ce qui amène à effectuer une capture totale ou partielle de CO₂.

On peut réaliser cette capture de CO₂ contenue dans les fumées de combustion de plusieurs façons afin de pouvoir le stocker en aval de l'installation de combustion. Tout d'abord, cette capture est réalisée par un lavage par un solvant, comme de la monoéthanolamine, qui solubilise de façon sélective le CO₂ contenu dans les fumées, le solvant est ensuite régénéré par extraction du CO₂ grâce à un chauffage par injection de vapeur d'eau dans un second réacteur puis le solvant régénéré est renvoyé dans le réacteur de lavage des fumées. Cependant cette solution oblige à traiter l'azote, diluant inerte nécessaire à la réaction de combustion, qui est contenu dans les fumées où le CO₂ représente typiquement environ 15% en volume. Ceci oblige à dimensionner l'installation de capture du CO₂ en proportion avec la quantité d'azote présent. D'autre part, la régénération thermique présente l'inconvénient de nécessiter de grandes quantités de vapeur, ce qui pénalise le rendement énergétique de l'installation de production d'électricité et/ou de vapeur.

On a alors envisagé de remplacer le diluant d'azote contenu dans l'air de combustion par du CO₂ recyclé et d'effectuer la combustion avec un oxydant O₂/CO₂. Cependant l'oxygène O₂ est produit à partir de l'air par une unité de séparation d'air et un système cryogénique qui consomment beaucoup d'énergie.

Ces solutions reposent sur une combustion et une capture du CO₂ à la pression atmosphérique, mais il est aussi possible de réaliser des installations de gazéification de combustibles solides, tel le charbon, sous pression; intégrées dans des cycles de production d'électricité. Cette gazéification sous pression produit un gaz de synthèse combustible contenant du CO, H₂, CO₂ et H₂O. Ces unités de gazéification sont couplées à des turbines à gaz et le CO₂ est récupéré sous pression par lavage au solvant sous pression dans ce cas, ce qui est plus favorable pour le transport ultérieur du CO₂ qui doit être réalisé à l'état liquide supercritique à 150 bars. La réaction de gazéification est réalisée avec de l'oxygène sous pression qui est produit par une unité de séparateur d'air ce qui est coûteux. De part sa complexité, ce type d'installation est peu fiable puisque sa disponibilité est typiquement de seulement 80%.

Il est également connu de réaliser une combustion de gaz (et non de matières solides) avec récupération intégrée de CO₂, en utilisant un oxyde métallique servant de vecteur support d'oxygène. Cet oxyde circule entre deux réacteurs dans lesquels il est soit oxydé dans un réacteur à lit circulant par une mise en contact avec de l'air, soit réduit par la mise en contact avec le combustible gazeux. Ce procédé présente l'avantage de ne pas nécessiter de séparation de l'air puisque l'oxyde constitue le vecteur support d'oxygène, mais il ne permet pas l'utilisation de combustibles solides. D'autre part ces installations exigent une absolue étanchéité d'atmosphère entre les deux réacteurs pour ne pas polluer l'air appauvri en O₂ sorti du réacteur d'oxydation par du CO₂ parasite sorti du réacteur de réduction. Mais pour utiliser du gaz, combustible très cher, il peut être plus économique d'utiliser des turbines à gaz à haut rendement (60%) associées à des installations de récupération de chaleur sur les fumées plutôt que des chaudières reliées à une turbine à vapeur à rendement plus faible (45%).

Il est enfin possible de réaliser la capture du CO₂ en utilisant un cycle de carbonates de calcium qui sont formés en aval d'une installation à lit fluidisé circulant dans un réacteur de mise en contact à lit fluidisé circulant, puis décomposés dans un second réacteur par apport thermique avant d'être recyclés vers le réacteur de mise en contact avec les fumées contenant le CO₂. Le CO₂ ainsi libéré peut être récupéré pour stockage.

Dans l'article 98F-36 "Pollution Free Combustion of Coal and Other Fossil Fuels" du 26 octobre 1998 publié dans la revue du Western States Section of the Combustion Institute, les auteurs R.K. Lyon et J.A. Cole décrivent une installation de combustion de matières solides carbonées fonctionnant à la pression atmosphérique, comprenant un réacteur de réduction, un premier cyclone, un échangeur, un réacteur d'oxydation, un deuxième cyclone, un deuxième échangeur, dans lequel circule un oxyde qui est réduit puis oxydé dans chacun des deux réacteurs, et dans lequel le combustible solide carboné est broyé avant l'entrée dans le réacteur de réduction.

Malheureusement toutes ces techniques de capture de CO₂ post combustion présentent l'inconvénient de renchérir jusqu'à deux fois le coût d'investissement d'un centrale à charbon classique et elles nécessitent des surfaces au sol importantes.

L'invention permet de réaliser une installation de combustion de matières solides carbonées fonctionnant à la pression atmosphérique, avec capture intégrée du CO₂, sans nécessiter de séparation préalable de l'air, ni un recyclage de CO₂ pour substitution de l'azote de l'air de combustion. De par sa simplicité et sa compacité, ce système permet de réduire les coûts de captation du CO₂ tout en assurant la production de vapeur destinée à la génération d'électricité.

L'installation de combustion de matières solides carbonées selon l'invention comprend un réacteur de réduction d'oxydes, un premier cyclone, un échangeur de récupération sur les fumées, un réacteur d'oxydation d'oxydes, un deuxième cyclone, un échangeur de contrôle de température des oxydes en circulation dans lesquels circule un oxyde qui est réduit puis oxydé dans chacun des deux réacteurs, le combustible solide étant broyé avant l'entrée dans le réacteur de réduction d'oxydes, elle est caractérisée en ce que le mélange d'oxydes et de résidu carboné extrait du premier cyclone est épuré du résidu carboné par un dispositif spécifique d'élimination. Les oxydes sont réduits par mise en contact tout d'abord avec le combustible qui réagit avec l'oxygène libéré par l'oxyde puis oxydé par la mise en contact avec l'air qui régénère l'oxyde. La taille réduite des particules de combustible solide permet une combustion plus complète et plus rapide et permet de produire presque 100% de cendres volantes.

Selon une autre caractéristique, l'installation dégage du CO2 de façon concentrée depuis le réacteur de réduction et de l'air de combustion depuis le réacteur d'oxydation dans des circuits séparés. La combustion a lieu avec une séparation du courant de CO2 produit et sans séparation d'air.

Selon une caractéristique particulière, le combustible est du charbon. Le charbon est constitué de matières volatiles, d'humidité, de cendres et de carbone fixe.

Selon une autre caractéristique, le charbon après broyage a un diamètre moyen inférieur à 500µ. Le charbon va alors se fragmenter suite à son introduction dans le réacteur de réduction d'oxydes à haute température (700-1150°C). Cette granulométrie du charbon permet d'éviter l'accumulation des cendres grossières à extraire en bas du réacteur de réduction et de produire quasiment 100% de cendres volantes. Les matières volatiles du charbon se dégagent très rapidement suite à l'échauffement du charbon et réagissent avec l'oxygène dégagé par les oxydes pour réaliser une combustion partielle qui se poursuit par la combustion du carbone fixe.

Selon une autre caractéristique, le réacteur de réduction est à lit fluidisé circulant fluidisé par de la vapeur d'eau. Les combustibles solides ont une cinétique de combustion lente, il est donc nécessaire d'utiliser un lit fluidisé circulant comme réacteur de réduction pour bénéficier d'un temps de séjour allongé via la recirculation interne des solides dans le réacteur et la recirculation externe via le premier cyclone.

Selon une caractéristique complémentaire, le lit est fluidisé par du CO₂. En plus de la vapeur d'eau, le lit est fluidisé par un mélange de vapeur d'eau et de CO₂ recyclé.

Selon une caractéristique particulière, le lit de solides, composé d'oxydes et de résidus carbonés, est recirculé à la base du réacteur de réduction et une partie de ce lit est extraite à la base du siphon du lit circulant puis épuré ou strippé dans un dispositif spécifique d'élimination du résidu carboné. Les oxydes débarrassés du résidu carboné sont transférés vers le réacteur d'oxydation pour oxydation à haute température avec l'air. Si le lit des solides était transféré directement dans le réacteur d'oxydation, la combustion du résidu carboné produirait du CO₂ qui réduirait la capture globale du CO₂ et qui déséquilibrerait les échanges thermiques dans les réacteurs et conduirait à surdimensionner l'échangeur de chaleur du réacteur d'oxydation. L'air appauvri en oxygène est refroidi dans des échangeurs puis dépoussiérés avant renvoi dans l'atmosphère.

Selon une caractéristique particulière, le dispositif d'élimination du résidu carboné est fluidisé à la vapeur d'eau uniquement. La vapeur d'eau est condensable dans la chaîne de refroidissement du CO₂. La fluidisation de ce dispositif sépare le résidu carboné des oxydes en prenant avantage des différences de granulométrie et de masse volumique entre les oxydes et le résidu carboné. En effet, les oxydes ont une granulométrie de 50 à 500µ et une masse volumique de 2000 à 7000 Kg/m³ et le résidu carboné une granulométrie de 5 à 50µ et une masse volumique de 500 à 1500 Kg/m³.

Selon une caractéristique particulière, le résidu carboné est entraîné et renvoyé avec la vapeur d'eau vers le premier réacteur de réduction d'oxydes. Par la fluidisation, les particules les plus fines et les plus légères, c'est à dire le résidu carboné, sont entraînées et renvoyées avec la vapeur d'eau de fluidisation vers le réacteur de réduction. La vapeur d'eau présente en plus l'avantage connu en gazéification du charbon de convertir en CO le résidu carboné qui est renvoyé au réacteur de réduction. La vapeur d'eau de fluidisation agit donc à la fois comme agent de séparation et de transport et comme convertisseur du résidu carboné.

Selon une caractéristique particulière, un échangeur de chaleur est disposé dans un lit extérieur sous la sortie inférieure du cyclone du réacteur d'oxydation. Une partie du lit est recirculé à la fois vers le bas du réacteur d'oxydation et vers cet échangeur à lit fluidisé pour réguler les températures de fonctionnement à charge partielle via le contrôle d'ouverture de la vanne d'admission des solides recyclés qui seront ainsi refroidis après passage dans l'échangeur.

Selon une caractéristique particulière, un séparateur d'oxydes et de cendres volantes est placé après les échangeurs de chaleur sur les fumées riches en CO₂. En aval du cyclone et après refroidissement dans des échangeurs de chaleur, les gaz de combustion (CO₂, H₂O, SO₂) et les cendres volantes provenant du réacteur de réduction sont séparées par dépoussiérage. Les particules fines d'oxydes générées par l'usure des particules entre elles (attrition) et dégradation sont séparées des cendres volantes et renvoyées vers le réacteur d'oxydation.

Selon une autre caractéristique, l'oxydant est un oxyde métallique. Cet oxyde métallique peut être à base de fer, de nickel, d'alumine ou de mélange de ces éléments.

Selon une autre caractéristique, l'oxyde métallique est à base de fer. L'oxyde métallique à base de fer est préféré, car c'est le moins cher des oxydes métalliques. L'oxydant peut être sous forme de FeO, ou de Fe₂O₃, ou de Fe₃O₄.

L'invention sera mieux comprise à la lecture de la description qui va suivre donnée uniquement à titre d'exemple et faite en se référant aux dessins annexés dans lesquels:

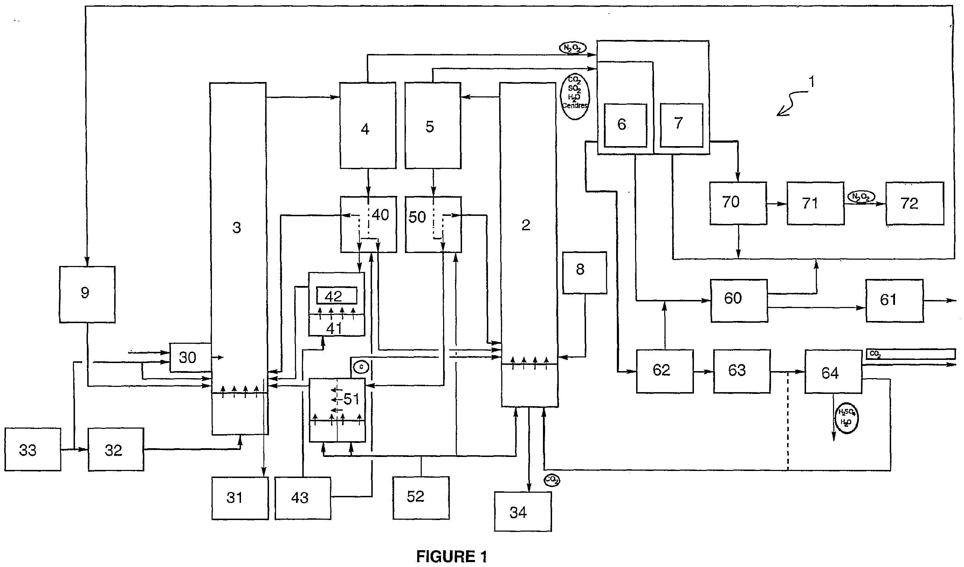

- la figure 1 est une vue générale de l'installation de combustion selon l'invention,
- la figure 2 est une vue détaillée du dispositif de séparation des résidus carbonés.

L'installation 1 comprend un réacteur de réduction d'oxydes 2 et un réacteur d'oxydation d'oxydes 3, deux cyclones 4 et 5 chacun étant dédié à un réacteur, deux cages arrières 6 et 7 contenant des échangeurs de récupération sur fumées 66 et sur air 73, chacune dédié à un des réacteurs.

Le réacteur de réduction 2 est alimenté en combustible à partir d'un silo de charbon pulvérisé 8. Ce charbon a préalablement été grossièrement broyé.

Le réacteur 2 est fluidisé avec un mélange composé de vapeur d'eau et de CO₂ recyclé. Au démarrage, la fluidisation du lit n'est assurée que par de la vapeur d'eau.

Les oxydes après réduction dans le réacteur 2 passent dans le cyclone 5 où les particules solides d'oxydes sont séparées des cendres volantes et des gaz de combustion constitués de CO₂, SO₂ et de vapeur d'eau.

Les cendres volantes et les gaz de combustion passent ensuite dans les échangeurs de chaleur 6. Les cendres volantes sont séparées des gaz de combustion dans un filtre à manches 62. Le mélange CO₂, H₂O et SO₂ est ensuite envoyé dans le circuit de refroidissement et de condensation 64 via un ventilateur de tirage 63. Ce circuit 64 permet d'extraire l'eau et le H₂SO₄ restant du CO₂ qui est ensuite partiellement réintroduit dans le réacteur 2.

Les cendres volantes de diamètre inférieur à 50µm et de masse volumique d'environ 800kg/m3 sont séparées des oxydes dont la granulométrie est de 50µm à 500µm et le masse volumique de 2000 à 7000kg/m3, dans un séparateur 60 pour être stockées dans un silo de cendres 61 tandis que les oxydes sont dirigés vers le silo 9. Cette séparation s'effectue par fluidisation avec de l'air à basse température dans un réacteur à lit fluidisé 60 où la vitesse de fluidisation est sélectionnée pour fluidiser les cendres volantes et les transférer vers un silo 61 via un transport pneumatique tandis que les oxydes décantent et sont extraits à la base du réacteur à lit fluidisé 60 et renvoyé vers le silo 9.

Les solides, composés d'oxydes et de résidus carbonés, sortant du cyclone 5 passent dans un siphon 50 d'où une première partie est renvoyée dans le réacteur 2 et une deuxième partie est dirigée vers un dispositif d'élimination du résidu carboné 51. Ce siphon 50 est fluidisé par de la vapeur d'eau 52.

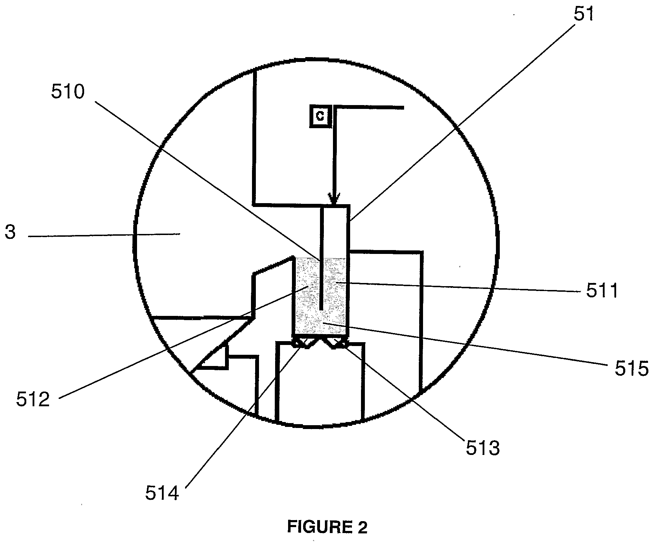

Ce dispositif d'élimination 51 est fluidisé par de la vapeur d'eau 52, qui permet de séparer les particules fines et légères telles que le résidu carboné et de le réintroduire dans le réacteur 2, tandis que les particules plus denses et plus grosses d'oxydes sont transférées vers le réacteur 3 pour oxydation. Comme on le voit figure 2, ce dispositif 51 contient un déflecteur interne 510 qui constitue deux compartiments 511 et 512 sur le passage des solides fluidisés avec une étanchéité de pression, procurée par la hauteur de solides fluidisés 515, entre les deux compartiments 511 et 512. La fluidisation de chaque compartiment 511 et 512 est contrôlée de façon indépendante par deux entrées 513 et 514 de la vapeur d'eau, pour obtenir le champ de vitesse désiré pour une séparation des oxydes et du résidu carboné dans la première chambre 511 ainsi que le transfert des oxydes dans la deuxième chambre 512. Au-dessus du premier compartiment 511 un évent ramène le résidu carboné entraîné par la vapeur d'eau vers le réacteur 2.

Le réacteur d'oxydation 3 est équipé d'un système de démarrage 30 qui est alimenté en combustible tel que du gaz, en oxydes à partir du silo d'oxydes 9 et en air de fluidisation et d'oxydation qui est introduit via des ventilateurs 32 el 33. Ce système 30 permet de réchauffer l'ensemble des réacteurs et des boucles de circulation de solides jusqu'à un seuil de température au-delà de 700°C et de lancer l'ensemble des réactions. Les particules solides d'oxydes ainsi chauffées iront réagir et réchauffer le réacteur de réduction 2.

Un lit fluidisé composé d'oxydes circule dans le réacteur 3 qui est fluidisé par de l'air venant de l'extérieur. Les oxydes et l'air appauvri, après l'oxydation dans le réacteur 3, passent dans le cyclone 4 où les particules solides d'oxydes sont séparées des gaz constitués essentiellement de N₂ et O₂.

L'air qui a été chauffé dans le réacteur 3 est refroidit par des échangeurs de chaleur 7. Les oxydes entraînés sont séparés de l'air par un filtre à manches 70 et réintroduits dans le silo 9. Un ventilateur de tirage 71 renvoie ensuite l'air dans l'atmosphère par une cheminée 72.

Les particules solides d'oxydes qui ont été extraites sous le cyclone 4 passent par un siphon 40 d'où une première partie est transférée dans le bas du réacteur 2, une deuxième partie est recirculée dans le bas du réacteur 3 et une troisième partie est dirigée vers un lit extérieur 41 où est placé un échangeur de chaleur 42 fluidisé par de l'air sous pression 43 puis finalement réintroduite dans le réacteur 3. L'échangeur 42 permet de réguler la température dans le bas du réacteur 3 en particulier lors des charges partielles. Le siphon 40 est fluidisé par de l'air sous pression alimentant également le lit extérieur 41.

Un appoint d'oxydes dans le réacteur 3 est possible via le silo 9 et les oxydes usés sont récupérés dans un silo de récupération d'oxydes 31. Cet appoint d'oxydes peut aussi être justifié pour compenser les pertes par attrition dans les différents réacteurs 2 et 3, de disposer de suffisamment d'oxydes pour assurer le transfert des matières et la circulation des solides.

Un silo de récupération 34 est placé sous le réacteur 2 pour une extraction périodique des grosses particules de cendres ou d'agglomérats.

Nous allons maintenant décrire le cycle complet des différentes réactions.

Le combustible broyé est injecté dans le réacteur 2 qui contient un lit circulant d'oxyde à haute température (700-1150°C). Dans le cas du charbon, le diamètre moyen sera inférieur à 500µ .Le combustible va se fragmenter suite à son introduction dans ledit réacteur 2. La granulométrie du combustible permet d'éviter l'accumulation de cendres grossières qui doivent être extraites du bas du réacteur 2 et de produire presque 100% de cendres volantes. Ces cendres ne vont donc pas s'accumuler dans le lit d'oxydes en circulation plus grossier qui est collecté par le cyclone 5.

Le charbon étant un combustible solide avec une cinétique lente de combustion avec une teneur en matières volatiles de 20 à 60%, il est nécessaire d'utiliser un lit fluidisé circulant comme réacteur de réduction afin de bénéficier d'un temps de séjour dans le réacteur 2 allongé grâce à la recirculation interne des solides dans le réacteur et la recirculation externe via le cyclone 5.

Les matières volatiles se dégagent très rapidement suite à l'échauffement du combustible et réagissent avec l'oxygène dégagé par les oxydes pour réaliser une combustion partielle qui se poursuit par la combustion du carbone fixe.

Une partie du lit d'oxydes est extraite à la base du siphon 50 pour être épuré des résidus carbonés qui n'ont pas été transformés en cendres volantes, puis réintroduite dans le réacteur 3 afin d'être oxydée par l'oxygène de l'air. L'air appauvri en oxygène est refroidi dans les échangeurs 7 puis dépoussiéré dans un filtre à manche 70 et renvoyé à l'atmosphère.

Le résidu carboné ne doit pas être transféré dans le réacteur 3 car il conduirait à la production exothermique de CO₂ qui serait alors renvoyé à l'atmosphère et réduirait donc la capture globale du CO₂ d'une part et augmenterait la taille des échangeurs de contrôle de température du réacteur d'oxydation 3.

L'oxyde régénéré suite à son passage dans le réacteur 3 est partiellement renvoyé vers le réacteur 2 pour entamer un nouveau cycle de transport d'oxygène du réacteur 3 vers le réacteur 2. La quantité d'oxydes envoyée dans le réacteur 2 est contrôlé par une vanne de contrôle de débit des solides (non représentée).

L'autre partie du lit d'oxyde est dirigée vers le bas du réacteur 3 et vers un échangeur à lit fluidisé 41 afin de réguler les températures de fonctionnement à charge partielle grâce au contrôle d'ouverture de la vanne d'admission des solides (non représentée).

Le système de combustion comprend des dispositifs d'appoint d'oxydes afin de remplacer les particules usées et celles qui sont perdues dans le cycle et d'extraction pour renouveler l'oxyde.

Les échangeurs de chaleur 7 peuvent être associés avantageusement à un cycle de vapeur supercritique (>600°C) grâce à la non corrosivité de l'air appauvri à haute température. Les échangeurs 66 peuvent être associés à l'échauffement à basse température de la vapeur supercritique.

Il est aussi possible de réaliser ce dispositif sous pression.

## Revendications

1. Installation de combustion (1) de matières solides carbonées fonctionnant à la pression atmosphérique, comprenant un réacteur de réduction (2), un premier cyclone (5), un échangeur (6), un réacteur d'oxydation (3), un deuxième cyclone (4) un deuxième échangeur (7), dans lequel circule un oxyde qui est réduit puis oxydé dans chacun des deux réacteurs (2, 3), un combustible solide carboné étant broyé avant l'entrée dans le réacteur de réduction (2), où le mélange d'oxydes et de résidu carboné extrait du premier cyclone (5) est épuré du résidu carboné par un dispositif spécifique d'élimination (51).

2. Installation de combustion (1) selon la revendication 1, **caractérisée en ce que** l'installation dégage du CO2 de façon concentré depuis le réacteur (2) et de l'air de combustion depuis le réacteur (3) dans des circuits séparés.

3. Installation de combustion (1) selon une des revendications précédentes, **caractérisée en ce que** le combustible est du charbon.

4. Installation de combustion (1) selon la revendication précédente, **caractérisée en ce que** le charbon après broyage a un diamètre moyen inférieur à 500µ.

5. Installation de combustion (1) selon une quelconque des revendications précédentes, **caractérisée en ce que** le réacteur de réduction (2) est à lit fluidisé circulant fluidisé avec de la vapeur d'eau.

6. Installation de combustion (1) selon la revendication précédente, **caractérisée en ce que** le lit est fluidisé par du CO₂ recyclé.

7. Installation de combustion (1) selon une des revendications précédentes, **caractérisée en ce que** le dispositif d'élimination (51) est fluidisé à la vapeur d'eau.

8. Installation de combustion (1) selon la revendication précédente, **caractérisée en ce que** le résidu carboné est entraîné et renvoyé avec la vapeur d'eau vers le réacteur (2).

9. Installation de combustion (1) selon une des revendications précédentes, **caractérisée en ce que** le réacteur d'oxydation (3) comprend un lit extérieur (41) et qu'un échangeur de chaleur à lit fluidisé est disposé dans le dit lit extérieur (41).

10. Installation de combustion (1) selon une des revendications précédentes, **caractérisée en ce qu'**un séparateur d'oxyde et de cendres volantes (60) est placé après les échangeurs (6).

11. Installation de combustion (1) selon une des revendications précédentes, **caractérisée en ce que** l'oxydant utilisé est un oxyde métallique.

12. Installation de combustion (1) selon la revendication précédente, **caractérisée en ce que** l'oxydant métallique est à base de fer.

## Patentansprüche

1. Verbrennungsanlage (1) für kohlenstoffhaltige Feststoffe, welche bei atmosphärischem Druck arbeitet und welche einen Reduktionsreaktor (2), einen ersten Zyklon (5), einen Wärmetauscher (6), einen Oxidationsreaktor (3), einen zweiten Zyklon (4) und einen zweiten Wärmetauscher (7), in welchem ein Oxid zirkuliert, das in den beiden Reaktoren (2, 3) reduziert bzw. anschließend oxidiert wird, umfasst, wobei ein kohlenstoffhaltiger fester Brennstoff vor dem Eintritt in den Reduktionsreaktor (2) zerkleinert wird, wobei die aus dem ersten Zyklon (5) ausgetragene Mischung von Oxiden und von kohlenstoffhaltigem Rückstand durch eine spezielle Entfernungsvorrichtung (51) von dem kohlenstoffhaltigen Rückstand gereinigt wird.

2. Verbrennungsanlage (1) nach Anspruch 1, **dadurch gekennzeichnet, dass** die Anlage CO₂ konzentriert aus dem Reaktor (2) und Verbrennungsluft aus dem Reaktor (3) in getrennten Kreisläufen freisetzt.

3. Verbrennungsanlage (1) nach einem der vorhergehenden Ansprüche, **dadurch gekennzeichnet, dass** der Brennstoff Kohle ist.

4. Verbrennungsanlage (1) nach dem vorhergehenden Anspruch, **dadurch gekennzeichnet, dass** die Kohle nach dem Zerkleinern einen mittleren Durchmesser hat, der kleiner als 500 µm ist.

5. Verbrennungsanlage (1) nach einem der vorhergehenden Ansprüche, **dadurch gekennzeichnet, dass** der Reduktionsreaktor (2) ein Reaktor mit zirkulierender Wirbelschicht ist, die mit Wasserdampf fluidisiert wird.

6. Verbrennungsanlage (1) nach dem vorhergehenden Anspruch, **dadurch gekennzeichnet, dass** die Wirbelschicht durch recyceltes CO₂ fluidisiert wird.

7. Verbrennungsanlage (1) nach einem der vorhergehenden Ansprüche, **dadurch gekennzeichnet, dass** die Entfernungsvorrichtung (51) mit Wasserdampf fluidisiert wird.

8. Verbrennungsanlage (1) nach dem vorhergehenden Anspruch, **dadurch gekennzeichnet, dass** der kohlenstoffhaltige Rückstand mit dem Wasserdampf mitgenommen und zum Reaktor (2) zurückgeführt wird.

9. Verbrennungsanlage (1) nach einem der vorhergehenden Ansprüche, **dadurch gekennzeichnet, dass** der Oxidationsreaktor (3) ein externes Bett (41) umfasst und dass ein Wirbelschicht-Wärmetauscher in dem externen Bett (41) angeordnet ist.

10. Verbrennungsanlage (1) nach einem der vorhergehenden Ansprüche, **dadurch gekennzeichnet, dass** ein Oxid- und Flugaschen-Abscheider (60) nach den Wärmetauschern (6) angeordnet ist.

11. Verbrennungsanlage (1) nach einem der vorhergehenden Ansprüche, **dadurch gekennzeichnet, dass** das verwendete Oxidationsmittel ein Metalloxid ist.

12. Verbrennungsanlage (1) nach dem vorhergehenden Anspruch, **dadurch gekennzeichnet, dass** das Metalloxidationsmittel ein Mittel auf Eisenbasis ist.

## Claims

1. Combustion installation (1) for burning carbon-containing solid materials that operates at atmospheric pressure, the installation including a reduction reactor (2), a first cyclone (5), an exchanger (6), an oxidation reactor (3), a second cyclone (4), and a second exchanger (7), in which circulates an oxide that is reduced and then oxidized in each of the two reactors (2, 3), a carbon-containing solid fuel being ground before entering the reduction reactor (2), wherein the mixture of oxides and carbon-containing residue extracted from the first cyclone (5) is cleansed of the carbon-containing residue by a dedicated elimination device (51).

2. Combustion installation (1) according to Claim 1, **characterized in that** the installation releases concentrated CO₂ from the reactor (2) and combustion air from the reactor (3) in separate circuits.

3. Combustion installation (1) according to either of the preceding claims, **characterized in that** the fuel is coal.

4. Combustion installation (1) according to the preceding claim, **characterized in that** after grinding the coal has an average particle diameter of less than 500 µ.

5. Combustion installation (1) according to any one of the preceding claims, **characterized in that** the reduction reactor (2) has a circulating fluidized bed fluidized with steam.

6. Combustion installation (1) according to the preceding claim, **characterized in that** the bed is fluidized with recycled CO₂.

7. Combustion installation (1) according to one of the preceding claims, **characterized in that** the elimination device (51) is fluidized by steam.

8. Combustion installation (1) according to the preceding claim, **characterized in that** the carbon-containing residue is entrained with the steam and fed to the reactor (2).

9. Combustion installation (1) according to one of the preceding claims, **characterized in that** the oxidation reactor (3) comprises an exterior bed (41) and that a fluidized bed heat exchanger is disposed in said exterior bed (41).

10. Combustion installation (1) according to one of the preceding claims, **characterized in that** an oxide and fly ash separator (60) is placed after the exchangers (6).

11. Combustion installation (1) according to one of the preceding claims, **characterized in that** the oxidizing agent is a metal oxide.

12. Combustion installation (1) according to the preceding claim, **characterized in that** the metal oxide is based on iron.
